# EUROPEAN PATENT SPECIFICATION

(11) **EP 0 578 471 B1**
(45) Date of publication and mention of the grant of the patent: **10.06.1998**
(21) Application number: 93305279.7
(22) Date of filing: 06.07.1993
(51) Int. Cl.: G02F 1/1333

(54) **Liquid crystal electro-optical device**
Elektrooptische Flüssigkristall-Vorrichtung
Dispositif électro-optique à cristal liquide

(30) Priority: 07.07.1992 JP 180037/92
(43) Date of publication of application: 12.01.1994
(73) Proprietor: SEIKO INSTRUMENTS CO., LTD., Tokyo (JP)
(72) Inventor: Sasaki, Masaaki, Akita Seimitsu Denshi Kokyo,, Akita 014-1 (JP); Iwasa, Koji, 19-3, Sakuragi-cho,, Miyagi 982, (JP)
(74) Representative: Sturt, Clifford Mark

(56) References cited:
- EP-A- 0 459 759
- US-A- 4 494 824
- US-A- 4 932 757
- PATENT ABSTRACTS OF JAPAN vol. 012, no. 188 (P-711) &JP-62295028
- PATENT ABSTRACTS OF JAPAN vol. 012, no. 133 (P-693) & JP-62255917
- PATENT ABSTRACTS OF JAPAN vol. 012, no. 370 (P-767) & JP-63121020

## Description

The present invention relates to a liquid crystal electro-optical device. Such devices typically have a liquid crystal injected between upper and lower substrates having transparent electrodes on their surfaces, and utilise optical changes caused by voltages being applied to the transparent electrodes.

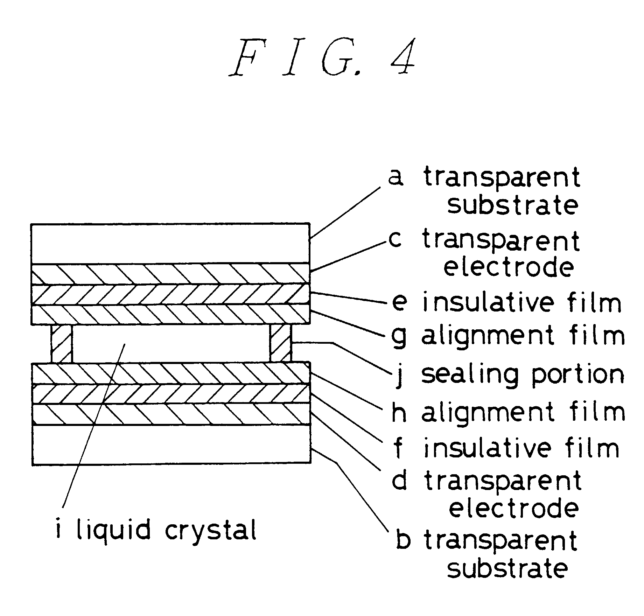

Figure 4 shows a sectional view of a prior art liquid crystal electro-optical device. Transparent electrodes, c, d are patterned on surfaces of facing substrates, a and b. Insulative films, e and f are formed on both or one of transparent electrodes c and d. Alignment films g and h are formed on insulative layers, e and f. Surfaces of the alignment films are treated, for example rubbing, in order to align the liquid crystal molecules in the liquid crystal, i. The two transparent substrates are attached by disposing sealing material, j, therebetween. The liquid crystal material, i, is injected with a 6 µm gap between the substrates.

A general structure of a liquid crystal electro-optical device is described so far. One role of the insulative film in a liquid crystal electro-optical device is to avoid short circuits being caused between electrodes of facing substrates, due to conductive dust particles being accidentally included which sometimes happens in the gap between the two transparent substrates.

Conventionally, one method of avoiding short circuits between the aforementioned transparent electrodes, is to form an insulative film from either SiO₂ blended with a non-conductive metal oxide, such as TiO₂ or ZrO, or SiO₂ is blended with organic metal chemicals which is coated on the electrodes, and then, backed to become a non-conductive metal oxide. The thickness of the insulative film is generally 500 - 1000 Å. The resistivity of an insulative film is, generally, about 10¹⁴ - 10¹³ Ωcm.

EP-A-0459759 discloses a liquid crystal display having a plurality of layers on its surface including a layer comprising a plurality of transparent electrodes (3) and a thin film layer (4) having a surface resistivity of between 1 x 10⁶ and 1 x 10¹² Ω/sq.

The following problems have been identified.
(1) An insulative layer has a high resistivity and is a dielectric film. Thus, if the insulative film, during the process of fabrication, is charged with static electricity, then it is difficult to discharge the layer. The, patterned transparent electrodes, under the insulative film, work as a collector, which causes a threshold voltage difference when voltages are applied. This voltage difference causes contrast variation, which means accidentally charged areas are brighter than the other areas, though they should not be.
(2) The insulative film disposed between the transparent electrodes and the liquid crystal which causes a difference between the voltage applied to the electrodes and the voltage actually applied to the liquid crystal. This is generally called "dielectric loss" and is caused by the insulative film. Therefore, a higher drive voltage is required from an externally supplied voltage which causes problems such as an increase of electricity consumption, a decrease in contrast during time divisional display and so on.

In order to solve the above mentioned problems (1) and (2), the level of electric resistivity of the insulative film must be lowered. The liquid crystal device is basically driven by alternate current. The method of lowering AC impedance is examined by adopting the following:
1 The thickness of the insulative film must be as thin as possible.
2 The insulative film must be formed by blending the film with higher dielectric constant oxides: TiO₂ or ZrO and so on.

The above 2 solutions are valid for minimising impedance by increasing the electric capacity of the insulative film disposed between the transparent electrodes and a liquid crystal layer.

These solutions are good as remedies for electricity consumption increase or cross talk caused by the dielectric loss of the insulative film as described in problem (2). However, there was no valid remedy for the problems basically caused by static electricity as described in problem (1).

An object of the present invention is to overcome the aforementioned problems and especially the problems caused by static electricity. Accordingly, the present invention provides means for minimising resistivity of direct current and alternate current by increasing the conductive constant of the insulative film. The merit of the present invention is achieved focusing on solving both problems (1) and (2) mentioned hereinbefore.

According to one aspect of the present invention, there is provided a liquid crystal electro-optical device comprising: upper and lower substrates having transparent electrodes on each facing surface; liquid crystal disposed between the upper and lower substrates; and an insulative film formed on the transparent electrode of at least one of the substrates; characterised in that the insulative film comprises an additive in the form of a conductive oxide such that the resistivity of the insulative film is in the range from 10⁶ to 10¹² Ωcm.

According to another aspect of the present invention, there is provided a method for manufacturing a liquid crystal electro-optical device comprising: forming the transparent electrodes on the upper and lower substrates; forming an insulative film on the transparent electrode of at least one of the substrates; and sealing liquid crystal between the upper and lower substrates; characterised in that the resistivity of the insulative film is set to be in the range from 10⁶ to 10¹² Ωcm by providing an additive in the form of a conductive oxide thereon.

By blending the insulative film with a conductive composition, the film resistivity is minimised to 10¹² Ωcm or less. Thus static electricity is not charged, and the liquid crystal electro-optical device has less dielectric loss of the insulative film. The role of the insulative film is to avoid short circuits between the upper and lower electrodes caused by accidental conductive contamination.

If the resistivity of the insulative film is too low, the film does not work as an insulative film. The resistivity of the liquid crystal sealed in the liquid crystal electro-optical device is usually about 10⁶ Ωcm. For that reason, the resistivity of the film should be greater than that of the liquid crystal 10⁶ Ωcm.

This invention can discharge electro-static charge, between the insulative film and the transparent electrodes, and between the insulative film and the liquid crystal, in a short time, by means of using, as the insulative film, material having a resistivity of 10⁶ to 10¹² Ωcm.

This invention, also decreases voltage loss at the time of voltages being applied from the transparent electrodes to the liquid crystal by using a material having resistivity of 10⁶ to 10¹² Ωcm.

The insulative film, still has an adequate resistivity, regardless of the above two effects.

A conductive oxide may be blended with the insulative film material to decrease the resistivity of the insulative film to 10⁶ to 10¹² Ωcm.

Embodiments of the present invention will now be described with reference to any one of the accompanying drawings, of which:
Fig. 1 is a chart representing the discharge time of static electricity applied to the liquid crystal electro-optical device against the resistivity of the insulative film;
Fig. 2 is a bar-graph representing the occurrence ratio of contrast non-uniformity caused by an electro-static charge against the resistivity of the insulative film;
Fig. 3 is a chart representing the optimum drive voltage against the resistivity of the insulative film; and
Fig. 4 shows a sectioned view of a general liquid crystal electro-optical device.

The followings are embodiments of this invention.

### Embodiment 1

In this embodiment, the resistivity of the insulative film made of silicon oxide is adjusted to seven resistivity of 10¹², 10¹¹, 10¹⁰, 10⁹, 10⁸, 10⁷ and 10⁶ Ω cm by adding antimony oxides into the insulative film. The above 7 insulative materials each have 7 different resistivity . Each are coated using a printing method on a respective pair of transparent electrodes, c, d, formed on transparent substrates, a, b, and then are fired at a temperature of about 250°C to form insulative films.

Alignment films, g, h, are formed in the same manner of the insulative film and are rubbed on their surfaces. Then, through the sealing portion, j, alignment films, g, h, are aligned facing each other and spaced about 6 µm. Finally liquid crystals, i, are enclosed therebetween. The manufacturing steps are described so far, and now thereafter, the measured results of the characteristics, appearance and electricity required of the manufactured liquid crystal electro-optical devices.

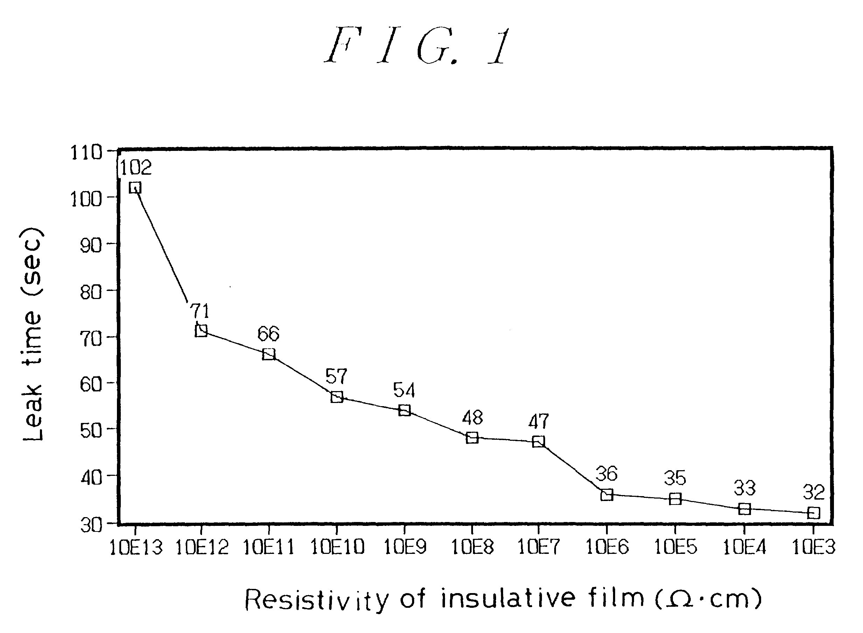

Figure 1 shows the experimental results that represent the relationship between the applied electro-static discharge and the resistivity of the insulative film.

The following are the experimental steps and the results.
1 At a temperature of 25°C, about 5 kV static electricity begins to build up in the liquid crystal electro-optical device, and at the same time, electro static discharge begins to start to be measured. In this experiment, the condition of electro-static charge is measured by observing any change of the liquid crystal molecular array.
2 The electro-statically charged liquid crystal electro-optical device in 1 is left in the same atmosphere as 1 to observe the progress of change of the liquid crystal array and when the device returns the uncharged status this experiment ends.
3 The above 2 steps of experiment, 1, 2 are repeated using each of the 7 insulative materials having 7 different resistivity.

In view of the results of Fig. 1, it is clear that the lower the resistivity of the insulative film, then the shorter is the electro-static discharge time. Therefore, the resistivity of the insulative film which contributes to the reduced electro-static discharge time should be adjusted to the value from 10⁶ to 10¹² Ωcm.

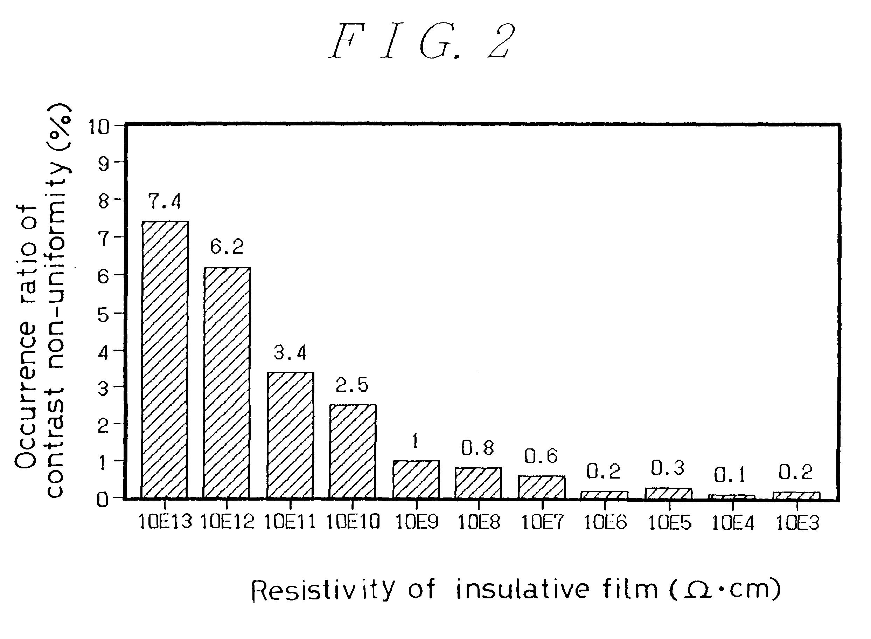

In Fig. 2, the experimental results show the relationship between the occurrence ratio of contrast non-uniformity caused by the electro-static charge and the resistivity of insulative film.
1 In the conventional manufacturing process, the liquid crystal electro-optical device is manufactured using insulative materials each having various resistivitys.
2 The ratio of contrast non-uniformity occurs in the liquid crystal electro-optical device manufactured in 1, when voltage is applied to the device.

In view of the results shown in Fig. 2, when a lower resistivity of insulative film material is used, the ratio of contrast non-uniformity becomes lower. Thereby, when the resistivity of the insulative film is adjusted from 10⁶ to 10¹² Ω cm, the ratio of contrast non-uniformity becomes lower.

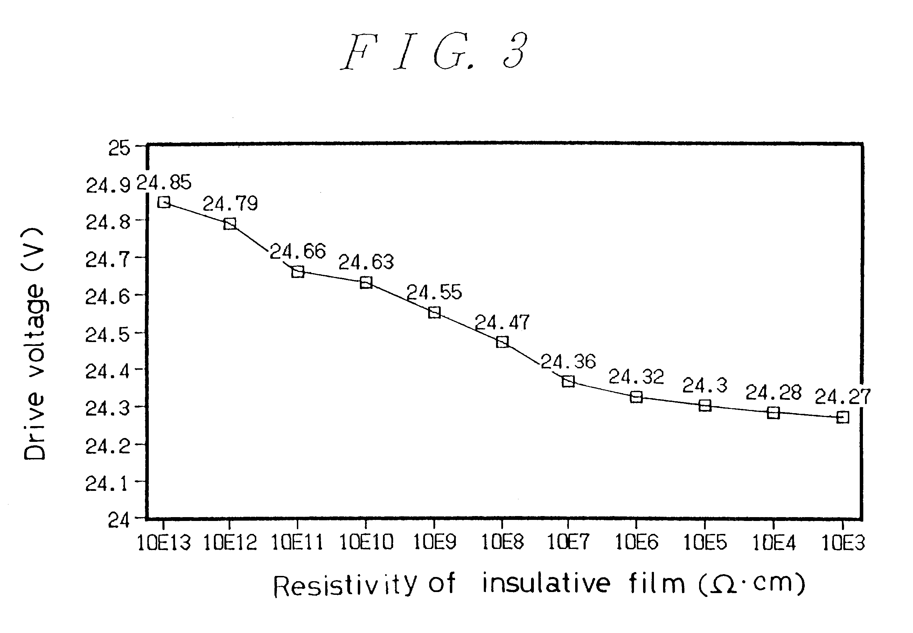

In Figure 3, the experimental results show the relationship between the drive voltage of the liquid crystal electro-optical device against the resistivity of the insulative film.

The measurement method is as follows.
1 The drive voltage is applied to each liquid crystal electro-optical device the insulative film of each having different resistivities.
2 When the contrast ratio becomes a maximum between the area of voltage applied and the area of no application during various voltage applications, the drive voltage is measured.

In view of the experimental results, when the resistivity of the insulative film is adjusted to 10¹³ Ωcm and more, it takes a long time to discharge any electro-static charges. The liquid crystal electro-static characteristics of the electro-statically charged electrode portions change, which causes a likelihood of a contrast non-uniformity ratio.

Also, the results from Figure 3, appear to indicate that as the resistivity of the insulative film is adjusted to a lower value, the drive voltage at the time of maximum contrast ratio described before, becomes lower. Therefore, the optimum resistivity of the insulative film is 10¹² Ωcm and lower.

On the other hand, when the resistivity of the insulative film becomes 10⁵ Ω cm or lower, the intrinsic function of the insulative film of avoiding short circuits between the electrodes of the upper and lower substrates, does not work. If the resistivity of the insulative film is adjusted to 10⁶ to 10¹² Ωcm, this contributes to decreasing of the drive voltage and the electricity consumption and at the same time avoiding short circuits between the upper and lower electrodes.

### Embodiment 2

In the same manner as Embodiment 1, the experiment is conducted. In this Embodiment 2, Tin oxide is used as the material blended with the Silicon oxide insulative film material. The results are similar to those in Embodiment 1.

### Embodiment 3

In the same manner as Embodiment 2, the experiment is conducted. In this Embodiment 3, Indium oxide is used as the material blended with the Silicon oxide insulative film material. Similar results to those in Embodiment 2 are obtained.

In view of the results from the above embodiments, regardless of what kind of material is used for conductive oxides blended with the insulative film, the resistivity itself of the insulative film is important and any compounds to decrease the resistivity may be applicable.

### Embodiment 4

In Embodiment 4, the Material for the insulative film is other than Silicon oxide.

The following is the manufacturing method.
1 On the transparent electrodes of the transparent substrates, an aluminium layer about 0.1 µm is formed in the vacuum evaporation method.
2 The vacuum evaporised aluminium film is processed to become the insulative film by anodic oxidation.
3 The substrates manufactured in 2 are immersed in an aqueous solution of acid hydrochloride including Tin chloride.
4 After immersion in step 3, the aluminium oxide film doped with Tin oxide, is heat treated.
5 By changing the blending ratio of the aqueous solution with hydrochloride including Tin chloride, this changes the concentration ratio of the Tin oxide doping, and hence the resistivity of the insulative film is adjusted to 10⁶, 10⁷, 10⁸, 10⁹, 10¹⁰, 10¹¹, and 10¹² Ωcm to gain 6 insulative films each having different resistivity.

The results of these insulative films are the same as in Embodiments 1 to 3. Effect of the invention
(1) This invention improves the manufacturing yield and the contrast non-uniformity caused by electro-static charge.
(2) This invention also contributes to lowering the drive voltage and the electricity consumption.
(3) Moreover, this invention avoids short circuits between the upper and lower substrates.

The aforegoing embodiments have been described as an example only and it will be appreciated by a person skilled in the art that modifications can be made without departing from the scope of the present invention which is a defined in the appended claims.

## Claims

1. A liquid crystal electro-optical device comprising:
upper and lower substrates (a, b) having transparent electrodes (c, d) on each facing surface;
liquid crystal (i) disposed between the upper and lower substrates (a, b); and
an insulative film (e, f) formed on the transparent electrode (c, d) of at least one of the substrates (a, b);
characterised in that the insulative film comprises an additive in the form of a conductive oxide such that the resistivity of the insulative film is in the range from 10⁶ to 10¹² Ωcm.

2. A liquid crystal electro-optical device according to claim 1, wherein the insulative film comprises at least one of silicon oxide or aluminium oxide.

3. A liquid crystal electro-optical device according to claim 1 or 2, wherein the conductive oxide is at least one of antimony, indium or tin oxide.

4. A liquid crystal electro-optical device according to any preceding claim, wherein the conductive oxide is a burnt conductive oxide.

5. A method of manufacturing a liquid crystal electro-optical device comprising:
forming respective transparent electrodes (c, d) on an upper and a lower substrate (a, b);
forming an insulative film (e, f) on the transparent electrode (c, d) of at least one of the substrates (a, b); and
sealing liquid crystal (i) between the upper and lower substrates (a, b);
characterised in that the resistivity of the insulative film is set to be in the range from 10⁶ to 10¹² Ωcm by providing an additive in the form of a conductive oxide thereon.

6. A method as claimed in claim 5, wherein the insulative film comprises at least one of silicon oxide or aluminium oxide.

7. A method as claimed in claim 5 or 6, wherein the conductive oxide is at least one of antimony oxide, indium oxide or tin oxide.

8. A method as claimed in any of claims 5 to 7, further comprising burning the conductive oxide.

## Patentansprüche

1. Elektrooptische Flüssigkristallvorrichtung, umfassend:
ein oberes und ein unteres Substrat (a, b), die auf einander zugekehrten Oberflächen transparente Elektroden (c, d) aufweisen;
Flüssigkristall (i), der zwischen dem oberen und dem unteren Substrat (a, b) angeordnet ist; und
ein auf der transparenten Elektrode (c, d) wenigstens eines der Substrate (a, b) gebildeter isolierender Film (e, f);
**dadurch gekennzeichnet,**
daß der isolierende Film einen Zusatz in der Form eines leitfähigen Oxids umfaßt, derart, daß der spezifische Widerstand des isolierenden Films im Bereich von 10⁶ bis 10¹² Ω cm liegt.

2. Elektrooptische Flüssigkristallvorrichtung nach Anspruch 1, bei der der isolierende Film wenigstens ein Oxid von Siliziumoxid oder Aluminiumoxid umfaßt.

3. Elektrooptische Flüssigkristallvorrichtung nach Anspruch 1 oder 2, bei der das leitfähige Oxid wenigstens ein Oxid von Antimon-, Indium- oder Zinnoxid ist.

4. Elektrooptische Flüssigkristallvorrichtung nach einem der vorhergehenden Ansprüche, bei der das leitfähige Oxid ein abgebranntes leitfähiges Oxid ist.

5. Verfahren zum Herstellen einer elektrooptischen Flüssigkristallvorrichtung, umfassend:
Bilden jeweiliger transparenter Elektroden (c, d) auf einem oberen und einem unteren Substrat (a, b);
Bilden eines isolierenden Films (e, f) auf der transparenten Elektrode (c, d) wenigstens eines der Substrate (a, b); und
Einschließen von Flüssigkristall (i) zwischen dem oberen und dem unteren Substrat (a, b);
**dadurch gekennzeichnet,**
daß der spezifische Widerstand des isolierenden Films eingestellt ist, im Bereich zwischen 10⁶ bis 10¹² Ω cm zu liegen, indem ein Zusatz in der Form eines leitfähigen Oxids hierauf vorgesehen wird.

6. Verfahren nach Anspruch 5, bei dem der isolierende Film wenigstens ein Oxid von Siliziumoxid oder Aluminiumoxid umfaßt.

7. Verfahren nach Anspruch 5 oder 6, bei dem das leitfähige Oxid wenigstens ein Oxid von Antimonoxid, Indiumoxid oder Zinnoxid ist.

8. Verfahren nach einem der Ansprüche 5 bis 7, ferner umfassend das Abbrennen des leitfähigen Oxids.

## Revendications

1. Dispositif électro-optique à cristaux liquides comprenant :
des substrats supérieur et inférieur (a, b) ayant des électrodes transparentes (c, d) sur chaque face en regard ;
un cristal liquide (i) disposé entre les substrats supérieur et inférieur (a, b) ; et
un film isolant (e, f) formé sur l'électrode transparente (c, d) d'au moins un des substrats (a, b) ;
caractérisé en ce que le film isolant comprend un additif sous la forme d'un oxyde conducteur tel que la résistivité du film isolant est comprise dans la gamme de 10⁶ à 10¹² Wcm.

2. Dispositif électro-optique à cristaux liquides selon la revendication 1, dans lequel le film isolant comprend au moins un oxyde de silicium ou un oxyde d'aluminium.

3. Dispositif électro-optique à cristaux liquides selon la revendication 1 ou 2, dans lequel l'oxyde conducteur est au moins un élément choisi parmi l'oxyde d'antimoine, d'indium ou d'étain.

4. Dispositif électro-optique à cristaux liquides selon l'une quelconque des revendications précédentes, dans lequel l'oxyde conducteur est un oxyde conducteur brûlé.

5. Procédé de fabrication d'un dispositif électro-optique à cristaux liquides comprenant :
la formation des électrodes transparentes respectives (c, d) sur un substrat supérieur et un substrat inférieur (a, b) ;
la formation d'un film isolant (e, f) sur l'électrode transparente (c, d) d'au moins un des substrats (a, b) ; et
le piégeage du cristal liquide (i) entre les substrats supérieur et inférieur (a, b) ;
caractérisé en ce que la résistivité du film isolant est déterminée pour être comprise dans une gamme allant de 10⁶ à 10¹² Wcm en apportant sur celui-ci un additif sous la forme d'un oxyde conducteur.

6. Procédé selon la revendication 5, dans lequel le film isolant comprend au moins un élément choisi parmi l'oxyde de silicium ou l'oxyde d'aluminium.

7. Procédé selon la revendication 5 ou 6, dans lequel l'oxyde conducteur est au moins un élément choisi parmi l'oxyde d'antimoine, l'oxyde d'indium ou l'oxyde d'étain.

8. Procédé selon l'une quelconque des revendications 5 à 7, comprenant en outre le brûlage de l'oxyde conducteur.
